# EUROPEAN PATENT SPECIFICATION

(11) **EP 3 264 817 B1**
(45) Date of publication and mention of the grant of the patent: **28.08.2019**
(21) Application number: 17156281.2
(22) Date of filing: 15.02.2017
(51) Int. Cl.: H04W 12/08, G06F 3/0482, G06F 3/0481, H04W 12/02, H04W 84/12, H04W 88/02

(54) **METHOD AND DEVICE FOR VISUALLY SHOWING THE SECURITY LEVEL OF A WIFI SIGNAL USING AN ICON**
METHODE UND GERÄT, UM DEN SECURITY LEVEL EINES WIFI SIGNALS VISUELL PER ICON ANZUZEIGEN
METHODE ET APPAREIL POUR AFFICHER VISUELLEMENT PAR UN ICONE LE NIVEAU DE SECURITE D'UN SIGNAL WIFI

(30) Priority: 30.06.2016 CN 201610509431
(43) Date of publication of application: 03.01.2018
(73) Proprietor: Beijing Xiaomi Mobile Software Co., Ltd., Beijing 100085 (CN)
(72) Inventor: LIU, Shuo, Beijing Beijing 100085 (CN); LI, Dasong, Beijing Beijing 100085 (CN); YAN, Shan, Beijing Beijing 100085 (CN)
(74) Representative: dompatent von Kreisler Selting Werner - Partnerschaft von Patent- und Rechtsanwälten mbB

(56) References cited:
- EP-A2- 1 542 400
- WO-A2-2005/079526
- KR-B1- 101 060 547
- US-A1- 2005 257 052
- US-A1- 2014 189 135

## Description

### TECHNICAL FIELD

The present disclosure generally relates to the technical field of mobile communication, and more particularly, to a method and a device for establishing a connection between a mobile terminal and a WiFi network, and the mobile terminal.

### BACKGROUND

With rapid development of communication technology, functions of mobile terminals, such as mobile phones, become more and more. People can not only make a call, send short messages, and the like, but also can make payments, store personal privacy information, and the like. Thereby, the mobile phones have become an indispensable part of people's daily life.

At present, the mobile terminals all have a WiFi (Wireless Fidelity) connection function. After the mobile terminal connects to a WiFi hotspot, the mobile terminal may display a WiFi signal icon on an upper side of its screen, so as to indicate that the mobile terminal has been connected to the WiFi network. Generally, the same icon is adopted whatever the user connects to the WiFi network at home, in the office or in a public circumstance. The user cannot perceive the security level of the currently connected WiFi, and the WiFi security issue is easily ignored. If the WiFi network which is connected by the mobile terminal is not safe, the privacy information saved in the mobile terminal is easily leaked out.

### SUMMARY

In order to overcome the problems existing in the related art, the embodiments of the present disclosure provide a method and device for establishing a connection between a mobile terminal and a WiFi network, and the mobile terminal. The technical solutions are as follows.

According to a first aspect of embodiments of the present disclosure, there is provided a method for establishing a connection between a mobile terminal and a WiFi network, including: determining a security level of a current WiFi network; marking a WiFi signal icon according to a color corresponding to the security level; and showing the marked WiFi signal icon.

In the above-mentioned method, the determining the security level of the current WiFi network includes:
searching the security level corresponding to the current WiFi network from a prestored corresponding relationship between the network and the security level.

In the above-mentioned method, after searching the security level corresponding to the current WiFi network, the method further includes:
when the security level corresponding to the current WiFi network is not searched out, displaying a current security level input box; and
storing the current WiFi network and the current security level associatively according to a user input instruction, the user input instruction carrying the current security level.

In the above-mentioned method, the method further includes:
monitoring whether there is a WiFi network having a security level higher than the current WiFi network; and
when there is the WiFi network having the security level higher than the current WiFi network, controlling the mobile terminal to connect to the WiFi network having the highest security level currently.

In the above-mentioned method, when it is monitored that there are a plurality of WiFi networks having security levels higher than the current WiFi network, the method further includes:
ranking the WiFi networks having the security levels higher than the current WiFi network in an order of the security levels from high to low; and
controlling the mobile terminal to connect to a target WiFi network according to a user selection instruction, the user selection instruction carrying an identity of the target WiFi network.

In the above-mentioned method, before controlling the mobile terminal to connect to the WiFi network having the highest security level currently, the method further includes:
displaying prompt information indicating whether to connect to the WiFi network having the highest security level currently.

According to a second aspect of embodiments of the present disclosure, there is provided a device for establishing a connection between a mobile terminal and a WiFi network, including: a determining module configured to determine a security level of a current WiFi network; a marking module configured to mark a WiFi signal icon according to a color corresponding to the security level; and a showing module configured to show the marked WiFi signal icon.

In the above-mentioned device, the determining module includes:
a searching submodule configured to search the security level corresponding to the current WiFi network from a prestored corresponding relationship between the network and the security level.

In the above-mentioned device, the device further includes:
a first displaying module configured to, when the security level corresponding to the current WiFi network is not searched out, display a current security level input box; and
a storing module configured to store the current WiFi network and the current security level associatively according to a user input instruction, the user input instruction carrying the current security level.

In the above-mentioned device, the device further includes:
a monitoring module configured to monitor whether there is a WiFi network having a security level higher than the current WiFi network; and
a first controlling module configured to, when there is the WiFi network having the security level higher than the current WiFi network, control the mobile terminal to connect to the WiFi network having the highest security level currently.

In the above-mentioned device, the device further includes:
a ranking module configured to, when it is monitored that there are a plurality of WiFi networks having security levels higher than the current WiFi network, rank the WiFi networks having the security levels higher than the current WiFi network in an order of the security levels from high to low; and
a second controlling module configured to control the mobile terminal to connect to a target WiFi network according to a user selection instruction, the user selection instruction carrying an identity of the target WiFi network.

In the above-mentioned device, the device further includes:
a second displaying module configured to, before the first controlling module controls the mobile terminal to connect to the WiFi network having the highest security level currently, display prompt information indicating whether to connect to the WiFi network having the highest security level currently.

According to a third aspect of embodiments of the present disclosure, there is provided a mobile terminal, including: the device for establishing a connection between a mobile terminal and a WiFi network of the embodiments in the second aspect.

According to a fourth aspect of embodiments of the present disclosure, there is provided a mobile terminal, including: a processor; and a memory for storing instructions executable by the processor; wherein the processor is configured to:
determine a security level of a current WiFi network;
mark a WiFi signal icon according to a color corresponding to the security level; and
show the marked WiFi signal icon.

The technical solutions provided by embodiments of the present disclosure may have the following beneficial effects.

The present invention also provides a computer program, which when executing on a processor of a mobile terminal, performs the above method.

When the mobile terminal connects to the target WiFi network, the security level of current WiFi network is determined, the WiFi signal icon is marked by applying a color corresponding to the security level, and the marked WiFi signal icon is shown. In this way, the WiFi signal icon is displayed with a color corresponding to the security level of the WiFi network, which facilitates the user to know the security level of the currently connected network via the color of the WiFi network icon, and thereby facilitates the user to perform relevant operations on the mobile terminal according to the security level of the network, so as to avoid the privacy information in the mobile terminal from being leaked.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for showing a WiFi signal icon in a mobile terminal, according to an exemplary embodiment.
Fig. 2 is a flow chart of a method for showing a WiFi signal icon in a mobile terminal, according to another exemplary embodiment.
Fig. 3 is a flow chart of a method for showing a WiFi signal icon in a mobile terminal, according to further another exemplary embodiment.
Fig. 4 is a flow chart of a method for showing a WiFi signal icon in a mobile terminal, according to still another exemplary embodiment.
Fig. 5 is a block diagram of a device for showing a WiFi signal icon in a mobile terminal, according to an exemplary embodiment.
Fig. 6 is a block diagram of a device for showing a WiFi signal icon in a mobile terminal, according to another exemplary embodiment.
Fig. 7 is a block diagram of a device for showing a WiFi signal icon in a mobile terminal, according to another exemplary embodiment.
Fig. 8 is a block diagram of a device for showing a WiFi signal icon in a mobile terminal, according to another exemplary embodiment.
Fig. 9 is a block diagram of a device for showing a WiFi signal icon in a mobile terminal, according to another exemplary embodiment.
Fig. 10 is a block diagram of a device for showing a WiFi signal icon in a mobile terminal, according to another exemplary embodiment.
Fig. 11 is a block diagram of a device 1100 for showing a WiFi signal icon in a mobile terminal, according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

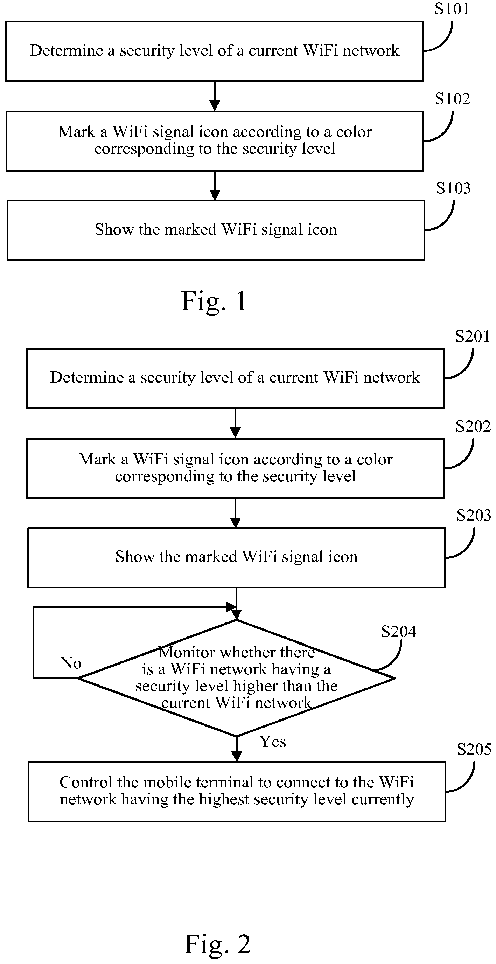

Fig. 1 is a flow chart of a method for showing a WiFi signal icon in a mobile terminal, according to an exemplary embodiment. As shown in Fig. 1, the method for showing a WiFi signal icon in a mobile terminal in the embodiment is applicable for a mobile terminal, and the mobile terminal may be a hardware device having various operating systems, such as a mobile phone, a tablet computer, a personal digital assistance, and an E-book. The method for showing a WiFi signal icon in a mobile terminal includes the following several steps. All embodiments of the present invention can comprise to actually establish the connection between the mobile terminal and the WiFi network so that they constitute a method for a establishing a connection between a mobile terminal and a WiFi network. The same applies to the inventive device and mobile terminal.

In step 101, a security level of a current WiFi network is determined.

During a connection to the WiFi network via the mobile terminal, before the mobile terminal is connected to the current WiFi network, the mobile terminal may acquire surrounding connectable WiFi networks via a scanning manner, rank the WiFi networks which have been preset with security levels by the user, and rank the WiFi networks having not set with security levels by the user according to existing WiFi ranking manner, for example, the WiFi networks having not set with security levels by the user may be ranked according to an alphabetical order.

It should be understood, for the WiFi networks having not set with security levels by the user, the mobile terminal sets the corresponding WiFi networks to be a preset security level, and a color corresponding to the preset security level is white, i.e., the color of all the WiFi signal icons used by the WiFi networks having not set with security levels by the user is white.

The security levels of the WiFi networks may be provided by default in the mobile terminal, or may be set by the user according to requirements. For example, the security level may be set to be very safe, safe, normal, and etc., or may be set to be security level 1, security level 2, security level 3, security level 4, and the like, which may be set particularly in combination with application scenarios, and is not restricted by the present disclosure.

After the mobile terminal is connected to the current WiFi network, a security level corresponding to the current WiFi network may be searched from a prestored corresponding relationship between network and the security level.

It should be explained, the prestored corresponding relationship between network and the security level is generated according to the security levels set for the used WiFi network by the user.

For example, during usage of the smart phone, assuming that a network name of the WiFi network at home is A, if the user is using the WiFi network at home, the security level of the WiFi network at home is set to be very safe, and the smart phone saves the network name of the WiFi network at home and its corresponding security level into the corresponding relationship between the network and the security level.

For another example, when the user visits his/her friend and uses the WiFi network at home of the friend, the user may set the security level of the WiFi network at home of the friend to be safe, and the smart phone saves the corresponding network name and its corresponding security level into the corresponding relationship between the network and the security level according to the user's setting.

For another example, when the user connects to the WiFi network in a public place, the user may set the security level of the WiFi network in the public place to which the smart phone is connected to be normal, and the smart phone saves the corresponding network name and its corresponding security level into the corresponding relationship between the network and the security level according to the user's setting.

In addition, in the embodiments of the present disclosure, after searching the security level corresponding to the current WiFi network, if no security level corresponding to the current WiFi network is searched out from the prestored corresponding relationship between the network and the security level, a current security level input box is displayed, and the current WiFi network and the current security level are associatively stored according to an instruction inputted by a user, wherein the instruction inputted by the user carries the current security level.

In step 102, a WiFi signal icon is marked according to a color corresponding to the security level.

After determining the security level of the current WiFi network of the mobile terminal, the color corresponding to the security level may be determined according to the corresponding relationship between the security level and the color saved in the mobile terminal, and the WiFi signal icon is marked by the color corresponding to the security level.

It should be understood, the corresponding relationship between the security level and the color may be default in the mobile terminal, or may be set by the user according to requirements. That is, when using the mobile terminal, the user may freely set the corresponding relationship between the security level and the color according to requirements.

In step 103, the marked WiFi signal icon is shown.

For example, when it is determined that the security level of the current WiFi network of the mobile terminal is normal, and it is determined that the color corresponding to this security level is yellow, the color of the WiFi signal icon displayed on a top of the mobile terminal is yellow, and the user may determine that the security level of the WiFi network connected by the mobile terminal is normal via the color of the WiFi signal icon. At this time, the user may know the security level of the WiFi network currently connected by the mobile terminal via the color of the WiFi signal icon, and perform relevant operations on the mobile terminal according to the security level of the mobile terminal, so as to avoid privacy information in the mobile terminal to be leaked out. For example, during payment of inputting an account and a password by the user, in order to avoid the leaking of the account and the password, the user may close the WiFi network at first, and use the data traffic for payment, so as to ensure the safety of his/her account.

In summary, the method for showing a WiFi signal icon in a mobile terminal provided by the present embodiment determines a security level of a current WiFi network; marks a WiFi signal icon by applying a color corresponding to the security level; and shows the marked WiFi signal icon. In this way, the WiFi signal icon is displayed with a color corresponding to the security level of the WiFi network, which facilitates the user to know the security level of the currently connected network via the color of the WiFi network icon, and thereby facilitates the user to perform relevant operations on the mobile terminal according to the security level of the network, so as to avoid the privacy information in the mobile terminal from being leaked.

Fig. 2 is a flow chart of a method for showing a WiFi signal icon in a mobile terminal, according to another exemplary embodiment. As shown in Fig. 2, the method for showing a WiFi signal icon in a mobile terminal in the embodiment is applicable for a mobile terminal, and the mobile terminal may be a hardware device having various operating systems, such as a mobile phone, a tablet computer, a personal digital assistance, and an E-book. The method for showing a WiFi signal icon in a mobile terminal includes the following several steps.

In step 201, a security level of a current WiFi network is determined.

During a connection to the WiFi network via the mobile terminal, before the mobile terminal is connected to the current WiFi network, the mobile terminal may acquire surrounding connectable WiFi networks via a scanning manner, rank the WiFi networks which have been preset with security levels by the user, and rank the WiFi networks having not set with security levels by the user according to existing WiFi ranking manner, for example, the WiFi networks having not set with security levels by the user may be ranked according to an alphabetical order.

It should be understood, for the WiFi networks having not set with security levels by the user, the mobile terminal sets the corresponding WiFi networks to be a preset security level, and a color corresponding to the preset security level is white, i.e., the color of all the WiFi signal icons used by the WiFi networks having not set with security levels by the user is white.

The security levels of the WiFi networks may be provided by default in the mobile terminal, or may be set by the user according to requirements. For example, the security level may be set to be very safe, safe, normal, and etc., or may be set to be security level 1, security level 2, security level 3, security level 4, and the like, which may be set particularly in combination with application scenarios, and is not restricted by the present disclosure.

After the mobile terminal is connected to the current WiFi network, a security level corresponding to the current WiFi network may be searched from a prestored corresponding relationship between network and the security level.

It should be explained, the prestored corresponding relationship between network and the security level is generated according to the security levels set for the used WiFi network by the user.

For example, during usage of the smart phone, assuming that a network name of the WiFi network at home is A, if the user is using the WiFi network at home, the security level of the WiFi network at home is set to be very safe, and the smart phone saves the network name of the WiFi network at home and its corresponding security level into the corresponding relationship between the network and the security level.

For another example, when the user visits his/her friend and uses the WiFi network at home of the friend, the user may set the security level of the WiFi network at home of the friend to be safe, and the smart phone saves the corresponding network name and its corresponding security level into the corresponding relationship between the network and the security level according to the user's setting.

For another example, when the user connects to the WiFi network in a public place, the user may set the security level of the WiFi network in the public place to which the smart phone is connected to be normal, and the smart phone saves the corresponding network name and its corresponding security level into the corresponding relationship between the network and the security level according to the user's setting.

In addition, in the embodiments of the present disclosure, after searching the security level corresponding to the current WiFi network, if no security level corresponding to the current WiFi network is searched out from the prestored corresponding relationship between the network and the security level, a current security level input box is displayed, and the current WiFi network and the current security level are associatively stored according to an instruction inputted by a user, wherein the instruction inputted by the user carries the current security level.

In step 202, a WiFi signal icon is marked according to a color corresponding to the security level.

After determining the security level of the current WiFi network of the mobile terminal, the color corresponding to the security level may be determined according to the corresponding relationship between the security level and the color saved in the mobile terminal, and the WiFi signal icon is marked by the color corresponding to the security level.

It should be understood, the corresponding relationship between the security level and the color may be default in the mobile terminal, or may be set by the user according to requirements. That is, when using the mobile terminal, the user may freely set the corresponding relationship between the security level and the color according to requirements.

In step 203, the marked WiFi signal icon is shown.

For example, when it is determined that the security level of the current WiFi network of the mobile terminal is normal, and it is determined that the color corresponding to this security level is yellow, the color of the WiFi signal icon displayed on a top of the mobile terminal is yellow, and the user may determine that the security level of the WiFi network connected by the mobile terminal is normal via the color of the WiFi signal icon. At this time, the user may know the security level of the WiFi network currently connected by the mobile terminal via the color of the WiFi signal icon, and perform relevant operations on the mobile terminal according to the security level of the mobile terminal, so as to avoid privacy information in the mobile terminal to be leaked out. For example, during payment of inputting an account and a password by the user, in order to avoid the leaking of the account and the password, the user may close the WiFi network at first, and use the data traffic for payment, so as to ensure the safety of his/her account.

In step 204, it is monitored whether there is a WiFi network having a security level higher than the current WiFi network.

In step 205, if there is the WiFi network having the security level higher than the current WiFi network, the mobile terminal is controlled to connect to the WiFi network having the highest security level currently.

It should be understood, after the mobile terminal is connected to the WiFi network having the highest security level currently, the mobile terminal may display the WiFi network icon with a color corresponding to the security level of the WiFi network having the highest security level currently.

For example, before updating, the color of the WiFi signal icon displayed at an upper side of the mobile terminal is white, assuming that there is a WiFi network higher than the current WiFi network and the network name of the WiFi network having the highest security level is B, if the mobile terminal determines that the security level of the WiFi network having the network name B is 3, and the color of the WiFi signal picture corresponding to the security level is determined as green according to the security level 3, then the mobile terminal is controlled to automatically connect to the WiFi network having the network name B, and a green WiFi signal icon is displayed at the upper side of a screen of the mobile terminal, such that the user can determine the security level of the WiFi network connected by the mobile terminal via the WiFi signal icon, which facilitates the user to perform relevant operations on the mobile terminal according to the security level.

In the method for showing a WiFi signal icon in a mobile terminal provided by the present embodiment, after the mobile terminal connects to the current WiFi network, if the presence of a WiFi network having a security level higher than the current WiFi network is monitored, the mobile terminal is controlled to connect to the WiFi network having the highest security level currently. Thereby, the smart switching of the WiFi networks is automatically realized according to the security levels, and the WiFi network icon is displayed with a color corresponding to the security level of the WiFi network after switching, which facilitates the user to know the security level of the currently connected network via the color of the WiFi network icon, and improves the experience of the user.

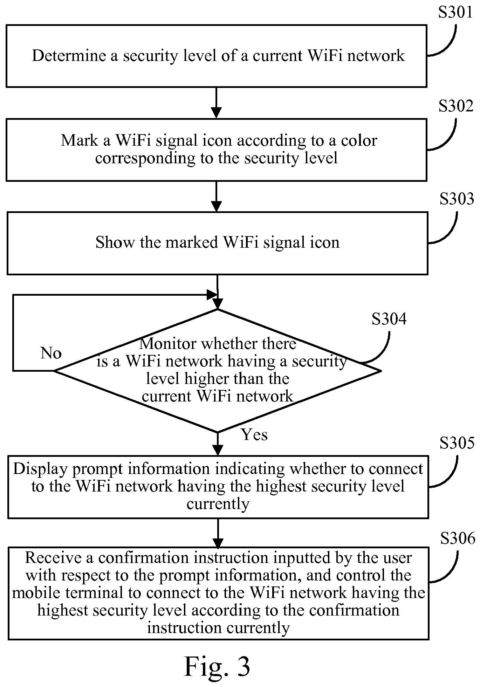

Fig. 3 is a flow chart of a method for showing a WiFi signal icon in a mobile terminal, according to further another exemplary embodiment. As shown in Fig. 3, the method for showing a WiFi signal icon in a mobile terminal in the embodiment is applicable for a mobile terminal, and the mobile terminal may be a hardware device having various operating systems, such as a mobile phone, a tablet computer, a personal digital assistance, and an E-book. The method for showing a WiFi signal icon in a mobile terminal includes the following several steps.

In step 301, a security level of a current WiFi network is determined.

During a connection to the WiFi network via the mobile terminal, before the mobile terminal is connected to the current WiFi network, the mobile terminal may acquire surrounding connectable WiFi networks via a scanning manner, rank the WiFi networks which have been preset with security levels by the user, and rank the WiFi networks having not set with security levels by the user according to existing WiFi ranking manner, for example, the WiFi networks having not set with security levels by the user may be ranked according to an alphabetical order.

It should be understood, for the WiFi networks having not set with security levels by the user, the mobile terminal sets the corresponding WiFi networks to be a preset security level, and a color corresponding to the preset security level is white, i.e., the color of all the WiFi signal icons used by the WiFi networks having not set with security levels by the user is white.

The security levels of the WiFi networks may be provided by default in the mobile terminal, or may be set by the user according to requirements. For example, the security level may be set to be very safe, safe, normal, and etc., or may be set to be security level 1, security level 2, security level 3, security level 4, and the like, which may be set particularly in combination with application scenarios, and is not restricted by the present disclosure.

After the mobile terminal is connected to the current WiFi network, a security level corresponding to the current WiFi network may be searched from a prestored corresponding relationship between network and the security level.

It should be explained, the prestored corresponding relationship between network and the security level is generated according to the security levels set for the used WiFi network by the user.

For example, during usage of the smart phone, assuming that a network name of the WiFi network at home is A, if the user is using the WiFi network at home, the security level of the WiFi network at home is set to be very safe, and the smart phone saves the network name of the WiFi network at home and its corresponding security level into the corresponding relationship between the network and the security level.

For another example, when the user visits his/her friend and uses the WiFi network at home of the friend, the user may set the security level of the WiFi network at home of the friend to be safe, and the smart phone saves the corresponding network name and its corresponding security level into the corresponding relationship between the network and the security level according to the user's setting.

For another example, when the user connects to the WiFi network in a public place, the user may set the security level of the WiFi network in the public place to which the smart phone is connected to be normal, and the smart phone saves the corresponding network name and its corresponding security level into the corresponding relationship between the network and the security level according to the user's setting.

In addition, in the embodiments of the present disclosure, after searching the security level corresponding to the current WiFi network, if no security level corresponding to the current WiFi network is searched out from the prestored corresponding relationship between the network and the security level, a current security level input box is displayed, and the current WiFi network and the current security level are associatively stored according to an instruction inputted by a user, wherein the instruction inputted by the user carries the current security level.

In step 302, a WiFi signal icon is marked according to a color corresponding to the security level.

After determining the security level of the current WiFi network of the mobile terminal, the color corresponding to the security level may be determined according to the corresponding relationship between the security level and the color saved in the mobile terminal, and the WiFi signal icon is marked by the color corresponding to the security level.

It should be understood, the corresponding relationship between the security level and the color may be default in the mobile terminal, or may be set by the user according to requirements. That is, when using the mobile terminal, the user may freely set the corresponding relationship between the security level and the color according to requirements.

In step 303, the marked WiFi signal icon is shown.

For example, when it is determined that the security level of the current WiFi network currently connected by the mobile terminal is normal, and it is determined that the color corresponding to this security level is yellow, the color of the WiFi signal icon displayed on a top of the mobile terminal is yellow, and the user may determine that the security level of the WiFi network connected by the mobile terminal is normal via the color of the WiFi signal icon. At this time, the user may know the security level of the WiFi network currently connected by the mobile terminal via the color of the WiFi signal icon, and perform relevant operations on the mobile terminal according to the security level of the mobile terminal, so as to avoid privacy information in the mobile terminal to be leaked out. For example, during payment of inputting an account and a password by the user, in order to avoid the leaking of the account and the password, the user may close the WiFi network at first, and use the data traffic for payment, so as to ensure the safety of his/her account.

In step 304, it is monitored whether there is a WiFi network having a security level higher than the current WiFi network.

In step 305, if there is the WiFi network having the security level higher than the current WiFi network, prompt information indicating whether to connect to the WiFi network having the highest security level currently is displayed.

In step 306, a confirmation instruction inputted by the user with respect to the prompt information is received, and the mobile terminal is controlled to connect to the WiFi network having the highest security level currently according to the confirmation instruction.

It should be understood, after the mobile terminal is connected to the WiFi network having the highest security level currently, the mobile terminal may display the WiFi network icon with a color corresponding to the security level of the WiFi network having the highest security level currently.

For example, before updating, the color of the WiFi signal icon displayed at an upper side of the mobile terminal is white, assuming that there is a WiFi network A higher than the current WiFi network, if the mobile terminal determines that the security level of the WiFi network A is 2, and the color of the WiFi signal icon corresponding to the security level is determined as yellow according to the security level 2, then the prompt information indicating whether to connect to the WiFi network A is displayed, and if a confirmation instruction inputted by the user with respect to the prompt information is received, the mobile terminal is controlled to connect to the WiFi network A, and a yellow WiFi signal icon is displayed at the upper side of the mobile terminal, such that the user can determine the security level of the WiFi network connected by the mobile terminal via the WiFi signal icon, which facilitates the user to perform relevant operations on the mobile terminal according to the security level.

In the method for showing a WiFi signal icon in a mobile terminal provided by the present embodiment, after the mobile terminal connects to the current WiFi network, if the presence of a WiFi network having a security level higher than the current WiFi network is monitored, the WiFi network having the highest security level is determined, and the prompt information of whether to switch to the WiFi network having the highest security level currently is provided to the user, then the mobile terminal is controlled to connect to the WiFi network having the highest security level currently according to the confirmation instruction of the user with respect to the prompt information, and the WiFi network icon is marked with the color of the WiFi network having the highest security level. Thereby, the WiFi network having the highest security level is provided to the user, the switching of the WiFi network is accomplished according to the instruction of the user, and the WiFi network icon is displayed with the color corresponding to the security level of the WiFi network after switching, which facilitates the user to know the security level of the currently connected network via the color of the WiFi network icon, and improves the experience of the user.

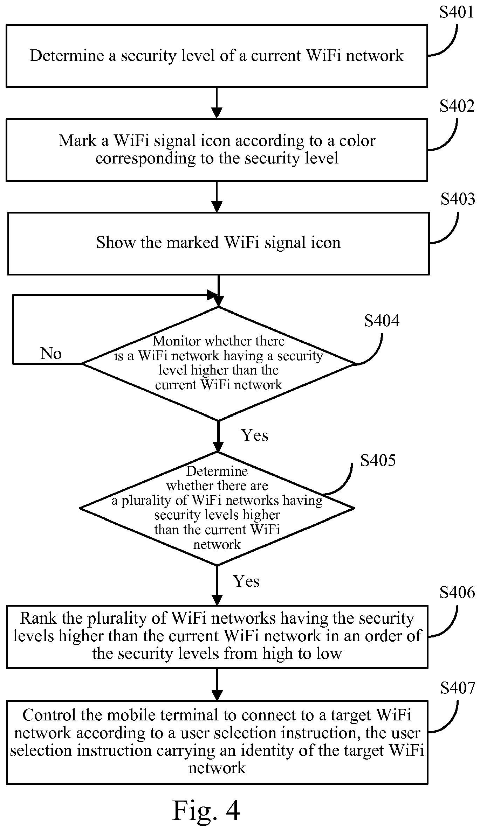

Fig. 4 is a flow chart of a method for showing a WiFi signal icon in a mobile terminal, according to further another exemplary embodiment. As shown in Fig. 4, the method for showing a WiFi signal icon in a mobile terminal in the embodiment is applicable for a mobile terminal, and the mobile terminal may be a hardware device having various operating systems, such as a mobile phone, a tablet computer, a personal digital assistance, and an E-book. The method for showing a WiFi signal icon in a mobile terminal includes the following several steps.

In step 401, a security level of a current WiFi network is determined.

During a connection to the WiFi network via the mobile terminal, before the mobile terminal is connected to the current WiFi network, the mobile terminal may acquire surrounding connectable WiFi networks via a scanning manner, rank the WiFi networks which have been preset with security levels by the user, and rank the WiFi networks having not set with security levels by the user according to existing WiFi ranking manner, for example, the WiFi networks having not set with security levels by the user may be ranked according to an alphabetical order.

It should be understood, for the WiFi networks having not set with security levels by the user, the mobile terminal sets the corresponding WiFi networks to be a preset security level, and a color corresponding to the preset security level is white, i.e., the color of all the WiFi signal icons used by the WiFi networks having not set with security levels by the user is white.

The security levels of the WiFi networks may be provided by default in the mobile terminal, or may be set by the user according to requirements. For example, the security level may be set to be very safe, safe, normal, and etc., or may be set to be security level 1, security level 2, security level 3, security level 4, and the like, which may be set particularly in combination with application scenarios, and is not restricted by the present disclosure.

After the mobile terminal is connected to the current WiFi network, a security level corresponding to the current WiFi network may be searched from a prestored corresponding relationship between network and the security level.

It should be explained, the prestored corresponding relationship between network and the security level is generated according to the security levels set for the used WiFi network by the user.

For example, during usage of the smart phone, assuming that a network name of the WiFi network at home is A, if the user is using the WiFi network at home, the security level of the WiFi network at home is set to be very safe, and the smart phone saves the network name of the WiFi network at home and its corresponding security level into the corresponding relationship between the network and the security level.

For another example, when the user visits his/her friend and uses the WiFi network at home of the friend, the user may set the security level of the WiFi network at home of the friend to be safe, and the smart phone saves the corresponding network name and its corresponding security level into the corresponding relationship between the network and the security level according to the user's setting.

For another example, when the user connects to the WiFi network in a public place, the user may set the security level of the WiFi network in the public place to which the smart phone is connected to be normal, and the smart phone saves the corresponding network name and its corresponding security level into the corresponding relationship between the network and the security level according to the user's setting.

In addition, in the embodiments of the present disclosure, after searching the security level corresponding to the current WiFi network, if no security level corresponding to the current WiFi network is searched out from the prestored corresponding relationship between the network and the security level, a current security level input box is displayed, and the current WiFi network and the current security level are associatively stored according to an instruction inputted by a user, wherein the instruction inputted by the user carries the current security level.

In step 402, a WiFi signal icon is marked according to a color corresponding to the security level.

After determining the security level of the current WiFi network of the mobile terminal, the color corresponding to the security level may be determined according to the corresponding relationship between the security level and the color saved in the mobile terminal, and the WiFi signal icon is marked by the color corresponding to the security level.

It should be understood, the corresponding relationship between the security level and the color may be default in the mobile terminal, or may be set by the user according to requirements. That is, when using the mobile terminal, the user may freely set the corresponding relationship between the security level and the color according to requirements.

In step 403, the marked WiFi signal icon is shown.

For example, when it is determined that the security level of the current WiFi network of the mobile terminal is normal, and it is determined that the color corresponding to this security level is yellow, the color of the WiFi signal icon displayed on a top of the mobile terminal is yellow, and the user may determine that the security level of the WiFi network connected by the mobile terminal is normal via the color of the WiFi signal icon. At this time, the user may know the security level of the WiFi network currently connected by the mobile terminal via the color of the WiFi signal icon, and perform relevant operations on the mobile terminal according to the security level of the mobile terminal, so as to avoid privacy information in the mobile terminal to be leaked out. For example, during payment of inputting an account and a password by the user, in order to avoid the leaking of the account and the password, the user may close the WiFi network at first, and use the data traffic for payment, so as to ensure the safety of his/her account.

In step 404, it is monitored whether there is a WiFi network having a security level higher than the current WiFi network.

In step 405, if there is the WiFi network having the security level higher than the current WiFi network, it is further determined whether there are a plurality of WiFi networks having security levels higher than the current WiFi network.

In step 406, if there are a plurality of WiFi networks having security levels higher than the current WiFi network, the plurality of WiFi networks having the security levels higher than the current WiFi network are ranked in an order of the security levels from high to low.

It should be understood, if there is a WiFi network having a security level higher than the current WiFi network, the WiFi network having the security level higher than the current WiFi network is used as the updated current WiFi network, and the mobile terminal is controlled to connect to the updated current WiFi network.

In step 407, the mobile terminal is controlled to connect to a target WiFi network according to a user selection instruction, the user selection instruction carrying an identity of the target WiFi network.

It should be understood, after the mobile terminal is connected to the updated target WiFi network, the mobile terminal may display a WiFi network icon with a corresponding color according to the security level of the updated target WiFi network.

In the method for showing a WiFi signal icon in a mobile terminal provided by the present embodiment, after the mobile terminal connects to the current WiFi network, if the presence of a plurality of WiFi networks having security levels higher than the current WiFi network is monitored, the plurality of WiFi networks having the security levels higher than the current WiFi network are ranked in an order of the security levels from high to low, the mobile terminal is controlled to connect to a target WiFi network according to a user selection instruction, a color marking corresponding to the security level of the WiFi network selected by the user is determined, the WiFi signal icon is marked with the color marking, and the WiFi signal icon with the corresponding color is displayed on the mobile terminal. Thereby, a plurality of WiFi networks having security levels higher than the current WiFi network are provided to the user, the switching of the WiFi network is accomplished according to the selection of the user, and the WiFi network icon is displayed with the corresponding color according to the security level of the WiFi network after switching, which facilitates the user to know the security level of the currently connected network via the color of the WiFi network icon, and improves the experience of the user.

Corresponding to the embodiments of the method for showing a WiFi signal icon in a mobile terminal mentioned above, the present disclosure also provides embodiments of a device for showing a WiFi signal icon in a mobile terminal.

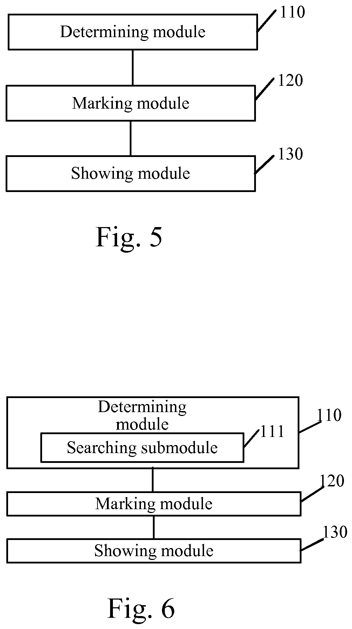

Fig. 5 is a block diagram of a device for showing a WiFi signal icon in a mobile terminal, according to an exemplary embodiment. The device for showing a WiFi signal icon in a mobile terminal may be achieved through software, hardware, or a combination of hardware and software. As shown in Fig. 5, the device for showing a WiFi signal icon in a mobile terminal includes: a determining module 110, a marking module 120, and a showing module 130.

The determining module 110 is configured to determine a security level of a current WiFi network.

The marking module 120 is configured to mark a WiFi signal icon according to a color corresponding to the security level.

The showing module 130 is configured to show the marked WiFi signal icon.

In summary, the device for showing a WiFi signal icon in a mobile terminal provided by the present embodiment determines a security level of a current WiFi network; marks a WiFi signal icon by applying a color corresponding to the security level; and shows the marked WiFi signal icon. In this way, the WiFi signal icon is displayed with a color corresponding to the security level of the WiFi network, which facilitates the user to know the security level of the currently connected network via the color of the WiFi network icon, and thereby facilitates the user to perform relevant operations on the mobile terminal according to the security level of the network, so as to avoid the privacy information in the mobile terminal from being leaked.

Fig. 6 is a block diagram of a device for showing a WiFi signal icon in a mobile terminal, according to another exemplary embodiment. This embodiment is based on the above-described embodiment shown in Fig. 5. As shown in Fig. 6, the determining module 110 may include: a searching submodule 111.

The searching submodule 111 is configured to search the security level corresponding to the current WiFi network from a prestored corresponding relationship between the network and the security level.

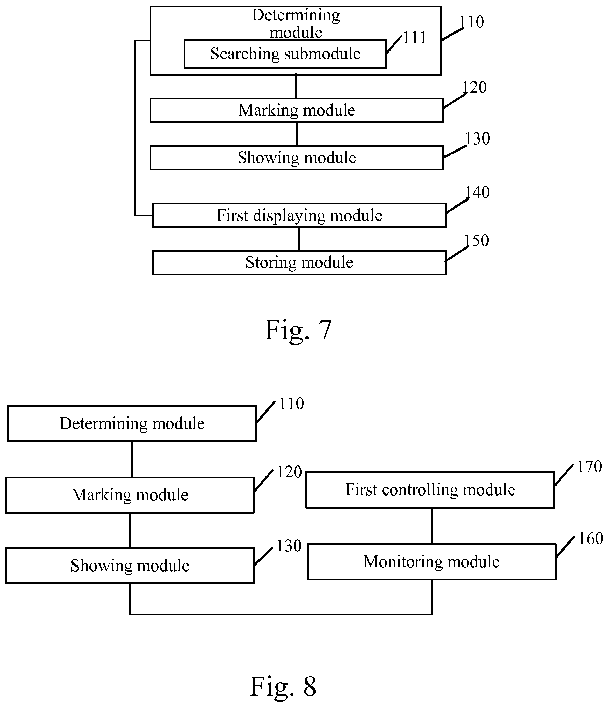

Fig. 7 is a block diagram of a device for showing a WiFi signal icon in a mobile terminal, according to another exemplary embodiment. This embodiment is based on the above-described embodiment shown in Fig. 6. The above device may further include: a first displaying module 140 and a storing module 150.

The first displaying module 140 is configured to, when the security level corresponding to the current WiFi network is not searched out, display a current security level input box.

The storing module 150 is configured to store the current WiFi network and the current security level associatively according to a user input instruction, the user input instruction carrying the current security level.

Fig. 8 is a block diagram of a device for showing a WiFi signal icon in a mobile terminal, according to another exemplary embodiment. This embodiment is based on the above-described embodiment shown in Fig. 5. As shown in Fig. 8, the above device may further include: a monitoring module 160 and a first controlling module 170.

The monitoring module 160 is configured to monitor whether there is a WiFi network having a security level higher than the current WiFi network.

The first controlling module 170 is configured to, when there is the WiFi network having the security level higher than the current WiFi network, control the mobile terminal to connect to the WiFi network having the highest security level currently.

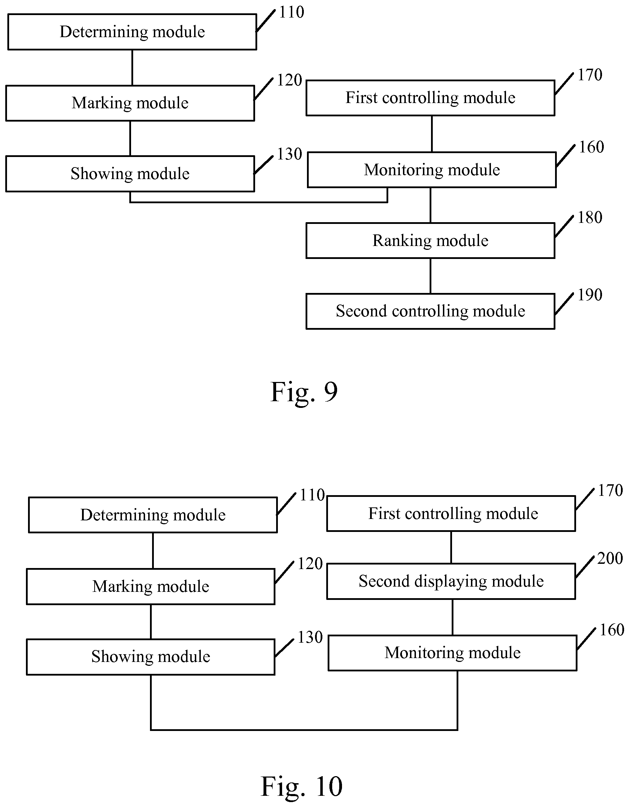

It should be explained, the structures of the monitoring module 160 and the first controlling module 170 in the above-described device embodiment shown in Fig. 9 may also be contained in the device embodiment in Figs. 6-8, which is not limited by the present disclosure.

Fig. 9 is a block diagram of a device for showing a WiFi signal icon in a mobile terminal, according to another exemplary embodiment. This embodiment is based on the above-described embodiment shown in Fig. 8. As shown in Fig. 9, the above device may further include: a ranking module 180 and a second controlling module 190.

The ranking module 180 is configured to, when it is monitored that there are a plurality of WiFi networks having security levels higher than the current WiFi network, rank the WiFi networks having the security levels higher than the current WiFi network in an order of the security levels from high to low.

The second controlling module 190 is configured to control the mobile terminal to connect to a target WiFi network according to a user selection instruction, the user selection instruction carrying an identity of the target WiFi network.

Fig. 10 is a block diagram of a device for showing a WiFi signal icon in a mobile terminal, according to another exemplary embodiment. This embodiment is based on the above-described embodiment shown in Fig. 8. As shown in Fig. 10, the above device may further include: a second displaying module 200.

The second displaying module 200 is configured to, before the first controlling module 170 controls the mobile terminal to connect to the WiFi network having the highest security level currently, display prompt information indicating whether to connect to the WiFi network having the highest security level currently.

With respect to the devices in the above embodiments, the specific manners for performing operations for individual modules therein have been described in detail in the embodiments regarding the methods, which will not be elaborated herein.

For device embodiments, since they are substantially corresponding to the method embodiments, the relevant contents may be referred to some explanations in the method embodiments. The above-described device embodiments are only illustrative. The units illustrated as separate components may be or may not be separated physically, the component illustrated as a unit may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

Correspondingly, the present disclosure also provides a mobile terminal, including: the device for showing a WiFi signal icon in a mobile terminal in the above embodiments.

In summary, the mobile terminal provided by the present embodiment determines a security level of a current WiFi network; marks a WiFi signal icon by applying a color corresponding to the security level; and shows the marked WiFi signal icon. In this way, the WiFi signal icon is displayed with a color corresponding to the security level of the WiFi network, which facilitates the user to know the security level of the currently connected network via the color of the WiFi network icon, and thereby facilitates the user to perform relevant operations on the mobile terminal according to the security level of the network, so as to avoid the privacy information in the mobile terminal from being leaked.

Correspondingly, the present disclosure also provides a mobile terminal, including: a processor; and a memory for storing instructions executable by the processor; wherein the processor is configured to: determine a security level of a current WiFi network; mark a WiFi signal icon according to a color corresponding to the security level; and show the marked WiFi signal icon.

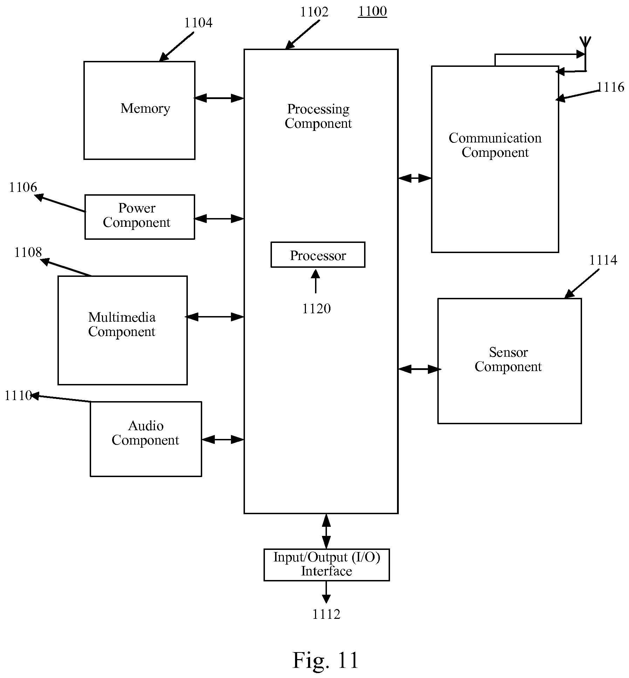

Fig. 11 is a block diagram of a device 1100 for showing a WiFi signal icon in a mobile terminal, according to an exemplary embodiment. For example, the device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 1104 including instructions, the above instructions are executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by the processor of a mobile terminal, enables the mobile terminal to perform the method for showing a WiFi signal icon in a mobile terminal, including:
determining a security level of a current WiFi network;
marking a WiFi signal icon according to a color corresponding to the security level; and
showing the marked WiFi signal icon..

## Claims

1. A method for establishing a connection between a mobile terminal and a WiFi network, comprising:
determining (S101, S201, S301, S401) a security level of the current WiFi network;
marking (S102, S202, S302, S402) a WiFi signal icon according to a color corresponding to the security level; and
showing (S103, S203, S303, S403) the marked WiFi signal icon,
**characterized in that** the security level is set by a user according to requirements,
the method further comprises:
monitoring (S204, S304, S404) whether there is a WiFi network having a security level higher than the current WiFi network; and
when there is the WiFi network having the security level higher than the current WiFi network, controlling (S205, S306) the mobile terminal to connect to the WiFi network having the highest security level currently, and
when it is monitored that there are a plurality of WiFi networks having security levels higher than the current WiFi network, the method further comprises:
ranking (S406) the WiFi networks having the security levels higher than the current WiFi network in an order of the security levels from high to low; and
controlling (S407) the mobile terminal to connect to a target WiFi network according to a user selection instruction, the user selection instruction carrying an identity of the target WiFi network.

2. The method of claim 1, wherein the determining the security level of the current WiFi network (S101, S201, S301, S401) comprises:
searching the security level corresponding to the current WiFi network from a prestored corresponding relationship between the network and the security level.

3. The method of claim 2, wherein after searching the security level corresponding to the current WiFi network, the method further comprises:
when the security level corresponding to the current WiFi network is not searched out, displaying a current security level input box; and
storing the current WiFi network and the current security level associatively according to a user input instruction, the user input instruction carrying the current security level.

4. The method of claim 1, wherein before controlling (S205) the mobile terminal to connect to the WiFi network having the highest security level currently, the method further comprises:
displaying (S305) prompt information indicating whether to connect to the WiFi network having the highest security level currently.

5. A device for establishing a connection between a mobile terminal and a WiFi network, comprising:
a determining module (110) configured to determine a security level of the current WiFi network;
a marking module (120) configured to mark a WiFi signal icon according to a color corresponding to the security level; and
a showing module (130) configured to show the marked WiFi signal icon,
**characterized in that** the security level is set by a user according to requirements,
the device further comprises:
a monitoring module (160) configured to monitor whether there is a WiFi network having a security level higher than the current WiFi network; and
a first controlling module (170) configured to, when there is the WiFi network having the security level higher than the current WiFi network, control the mobile terminal to connect to the WiFi network having the highest security level currently, and
the device further comprises:
a ranking module (180) configured to, when it is monitored that there are a plurality of WiFi networks having security levels higher than the current WiFi network, rank the WiFi networks having the security levels higher than the current WiFi network in an order of the security levels from high to low; and
a second controlling module (190) configured to control the mobile terminal to connect to a target WiFi network according to a user selection instruction, the user selection instruction carrying an identity of the target WiFi network.

6. The device of claim 5, wherein the determining module comprises:
a searching submodule (111) configured to search the security level corresponding to the current WiFi network from a prestored corresponding relationship between the network and the security level.

7. The device of claim 6, further comprising:
a first displaying module (140) configured to, when the security level corresponding to the current WiFi network is not searched out, display a current security level input box; and
a storing module (150) configured to store the current WiFi network and the current security level associatively according to a user input instruction, the user input instruction carrying the current security level.

8. The device of claim 5, further comprising:
a second displaying module (200) configured to, before the first controlling module (170) controls the mobile terminal to connect to the WiFi network having the highest security level currently, display prompt information indicating whether to connect to the WiFi network having the highest security level currently.

9. A mobile terminal, comprising: the device for establishing a connection between a mobile terminal and a WiFi network of any of claims 5-8.

## Patentansprüche

1. Verfahren zum Herstellen einer Verbindung zwischen einem mobilen Endgerät und einem WiFi-Netz, das umfasst:
Bestimmen (S101, S201, S301, S401) eines Security Levels des aktuellen WiFi-Netzes;
Markieren (S102, S202, S302, S402) eines WiFi-Signal-Icons gemäß einer Farbe, die dem Security Level entspricht; und
Anzeigen (S103, S203, S303, S403) des markierten WiFi-Signal Icons,
**dadurch gekennzeichnet, dass** der Security Level von einem Benutzer je nach Bedarf festgelegt wird,
wobei das Verfahren ferner umfasst:
Beobachten (S204, S304, S404), ob es ein WiFi-Netz mit einem Security Level gibt, der höher ist als der des aktuellen WiFi-Netzes; und
wenn es das WiFi-Netz mit dem Security Level, der höher ist als der des aktuellen WiFi-Netzes, gibt, Steuern (S205, S306) des mobilen Endgeräts zum Verbinden mit dem WiFi-Netz mit dem aktuell höchsten Security Level, und
wenn beobachtet wird, dass es eine Vielzahl von WiFi-Netzen mit Security Levels gibt, die höher sind als die des aktuellen WiFi-Netzes, umfasst das Verfahren ferner:
Klassifizieren (S406) der WiFi-Netze mit den Security Levels, die höher sind als die des aktuellen WiFi-Netzes, in einer Ordnung der Security Levels von hoch zu niedrig; und
Steuern (S407) des mobilen Endgeräts zum Verbinden mit einem Ziel-WiFi-Netz gemäß einer Benutzerauswahlanweisung, wobei die Benutzerauswahlanweisung eine Identität des Ziel-WiFi-Netzes enthält.

2. Verfahren nach Anspruch 1, bei dem das Bestimmen des Security Levels des aktuellen WiFi-Netzes (S101, S201, S301, S401) umfasst:
Suchen des Security Levels, der dem aktuellen WiFi-Netz entspricht, aus einer vorgespeicherten entsprechenden Beziehung zwischen dem Netz und dem Security Level.

3. Verfahren nach Anspruch 2, bei dem nach dem Suchen des Security Levels, der dem aktuellen WiFi-Netz entspricht, das Verfahren ferner umfasst:
wenn der Security Level, der dem aktuellen WiFi-Netz entspricht, nicht gefunden wird, Darstellen eines Eingabefelds für den aktuellen Security Level; und
Speichern des aktuellen WiFi-Netzes und des aktuellen Security Levels assoziativ gemäß einer Benutzereingabeanweisung, wobei die Benutzereingabeanweisung den aktuellen Security Level enthält.

4. Verfahren nach Anspruch 1, bei dem vor dem Steuern (S205) des mobilen Endgeräts zum Verbinden mit dem WiFi-Netz mit dem aktuell höchsten Security Level das Verfahren ferner umfasst:
Darstellen (S305) von Prompt-Informationen, die angeben, ob mit dem WiFi-Netz mit dem aktuell höchsten Security Level zu verbinden ist.

5. Vorrichtung zum Herstellen einer Verbindung zwischen einem mobilen Endgerät und einem WiFi-Netz, das umfasst:
ein Bestimmungsmodul (110), das derart ausgeführt ist, dass es einen Security Level des aktuellen WiFi-Netzes bestimmt;
ein Markierungsmodul (120), das derart ausgeführt ist, dass es ein WiFi-Signal-Icon gemäß einer Farbe, die dem Security Level entspricht, markiert; und
ein Anzeigemodul (130), das derart ausgeführt ist, dass es das markierte WiFi-Signal-Icon anzeigt,
**dadurch gekennzeichnet, dass** der Security Level von einem Benutzer je nach Bedarf festgelegt wird,
wobei die Vorrichtung ferner umfasst:
ein Beobachtungsmodul (160), das derart ausgeführt ist, dass es beobachtet, ob es ein WiFi-Netz mit einem Security Level gibt, der höher ist als der des aktuellen WiFi-Netzes; und
ein erstes Steuermodul (170), das derart ausgeführt ist, dass es dann, wenn es das WiFi-Netz mit dem Security Level, der höher ist als der des aktuellen WiFi-Netzes, gibt, das mobile Endgerät zum Verbinden mit dem WiFi-Netz mit dem aktuell höchsten Security Level steuert, und
wobei die Vorrichtung ferner umfasst:
ein Klassifizierungsmodul (180), das derart ausgeführt ist, dass es dann, wenn beobachtet wird, dass es eine Vielzahl von WiFi-Netzen mit Security Levels gibt, die höher sind als die des aktuellen WiFi-Netzes, die WiFi-Netze mit den Security Levels, die höher sind als die des aktuellen WiFi-Netzes, in einer Ordnung der Security Levels von hoch zu niedrig klassifiziert; und
ein zweites Steuermodul (190), das derart ausgeführt ist, dass es das mobile Endgerät zum Verbinden mit einem Ziel-WiFi-Netz gemäß einer Benutzerauswahlanweisung steuert, wobei die Benutzerauswahlanweisung eine Identität des Ziel-WiFi-Netzes enthält.

6. Vorrichtung nach Anspruch 5, bei der das Bestimmungsmodul umfasst:
ein Suchmodul (111), das derart ausgeführt ist, dass es den Security Level, der dem aktuellen WiFi-Netz entspricht, aus einer vorgespeicherten entsprechenden Beziehung zwischen dem Netz und dem Security Level sucht.

7. Vorrichtung nach Anspruch 6, die ferner umfasst:
ein erstes Darstellungsmodul (140), das derart ausgeführt ist, dass es dann, wenn der Security Level, der dem aktuellen WiFi-Netz entspricht, nicht gefunden wird, ein Eingabefeld für den aktuellen Security Level darstellt; und
ein Speichermodul (150), das derart ausgeführt ist, dass es das aktuelle WiFi-Netz und den aktuellen Security Level gemäß einer Benutzereingabeanweisung assoziativ speichert, wobei die Benutzereingabeanweisung den aktuellen Security Level enthält.

8. Vorrichtung nach Anspruch 5, die ferner umfasst:
ein zweites Darstellungsmodul (200), das derart ausgeführt ist, dass es, bevor das erste Steuermodul (170) das mobile Endgerät zum Verbinden mit dem WiFi-Netz mit dem aktuell höchsten Security Level steuert, Prompt-Informationen darstellt, die angeben, ob mit dem WiFi-Netz mit dem aktuell höchsten Security Level zu verbinden ist.

9. Mobiles Endgerät, das umfasst: die Vorrichtung zum Herstellen einer Verbindung zwischen einem mobilen Endgerät und einem WiFi-Netz nach einem der Ansprüche 5-8.

## Revendications

1. Procédé pour établir d'une connexion entre un terminal mobile et un réseau WiFi, comprenant le fait de:
déterminer (S101, S201, S301, S401) un niveau de sécurité du réseau WiFi actuel;
marquer (S102, S202, S302, S402) une icône de signal WiFi selon une couleur correspondant au niveau de sécurité; et
montrer (S103, S203, S303, S403) l'icône de signal WiFi marquée,
**caractérisé par le fait que** le niveau de sécurité est réglé par un utilisateur en fonction des nécessités,
le procédé comprenant par ailleurs le fait de:
vérifier (S204, S304, S404) s'il existe un réseau WiFi présentant un niveau de sécurité supérieur à celui du réseau WiFi actuel; et
lorsqu'il existe un réseau Wi-Fi présentant un niveau de sécurité supérieur à celui du réseau Wi-Fi actuel, commander (S205, S306) le terminal mobile pour se connecter au réseau Wi-Fi présentant actuellement le niveau de sécurité le plus élevé, et
lorsqu'il est vérifié qu'il existe une pluralité de réseaux WiFi présentant des niveaux de sécurité supérieurs à celui du réseau WiFi actuel, le procédé comprend par ailleurs les étapes suivantes consistant à:
classifier (S406) les réseaux WiFi présentant les niveaux de sécurité supérieurs à celui du réseau WiFi actuel selon un ordre des niveaux de sécurité de haut à bas; et
commander (S407) le terminal mobile pour se connecter à un réseau WiFi cible selon une instruction de sélection d'utilisateur, l'instruction de sélection d'utilisateur portant une identité du réseau WiFi cible.

2. Procédé selon la revendication 1, dans lequel la détermination du niveau de sécurité du réseau WiFi actuel (S101, S201, S301, S401) comprend le fait de:
rechercher le niveau de sécurité correspondant au réseau WiFi actuel à partir d'un rapport prémémorisé correspondant entre le réseau et le niveau de sécurité.

3. Procédé selon la revendication 2, dans lequel, après avoir recherché le niveau de sécurité correspondant au réseau WiFi actuel, le procédé comprend par ailleurs le fait de:
lorsque le niveau de sécurité correspondant au réseau WiFi actuel n'est pas recherché, afficher un casier d'entrée de niveau de sécurité actuel; et
mémoriser le réseau WiFi actuel et le niveau de sécurité actuel de manière associative selon une instruction d'entrée d'utilisateur, l'instruction d'entrée d'utilisateur portant le niveau de sécurité actuel.

4. Procédé selon la revendication 1, dans lequel, avant de commander (S205) le terminal mobile pour se connecter au réseau WiFi présentant le niveau de sécurité le plus élevé, le procédé comprend par ailleurs le fait de:
afficher (S305) une information utile indiquant s'il y a lieu de se connecter au réseau WiFi présentant actuellement le niveau de sécurité le plus élevé.

5. Dispositif pour établir une connexion entre un terminal mobile et un réseau WiFi, comprenant:
un module de détermination (110) configuré pour déterminer un niveau de sécurité du réseau WiFi actuel;
un module de marquage (120) configuré pour marquer une icône de signal WiFi selon une couleur correspondant au niveau de sécurité; et
un module d'affichage (130) configuré pour afficher l'icône de signal WiFi marquée,
**caractérisé par le fait que** le niveau de sécurité est réglé par un utilisateur selon les nécessités,
le dispositif comprenant par ailleurs:
un module de surveillance (160) configuré pour vérifier s'il existe un réseau WiFi présentant un niveau de sécurité supérieur à celui du réseau WiFi actuel; et
un premier module de commande (170) configuré pour commander, lorsqu'il existe un réseau WiFi qui présente un niveau de sécurité supérieur à celui du réseau WiFi actuel, le terminal mobile pour se connecter au réseau WiFi présentant le niveau de sécurité le plus élevé, et
le dispositif comprend par ailleurs:
un module de classement (180) configuré pour classifier, lorsqu'il est vérifié qu'il existe une pluralité de réseaux WiFi présentant des niveaux de sécurité supérieurs à celui du réseau WiFi actuel, les réseaux WiFi présentant des niveaux de sécurité supérieurs à celui du réseau WiFi actuel selon un ordre des niveaux de sécurité de haut à bas; et
un deuxième module de commande (190) configuré pour commander le terminal mobile pour se connecter à un réseau WiFi cible selon une instruction de sélection d'utilisateur, l'instruction de sélection d'utilisateur portant une identité du réseau WiFi cible.

6. Dispositif selon la revendication 5, dans lequel le module de détermination comprend:
un sous-module de recherche (111) configuré pour rechercher le niveau de sécurité correspondant au réseau WiFi actuel à partir d'un rapport prémémorisé correspondant entre le réseau et le niveau de sécurité.

7. Dispositif selon la revendication 6, comprenant par ailleurs:
un premier module d'affichage (140) configuré pour afficher, lorsque le niveau de sécurité correspondant au réseau WiFi actuel n'est pas recherché, un casier d'entrée de niveau de sécurité actuel; et
un module de mémoire (150) configuré pour mémoriser de manière associative le réseau WiFi actuel et le niveau de sécurité actuel selon une instruction d'entrée utilisateur, l'instruction d'entrée utilisateur portant le niveau de sécurité actuel.

8. Dispositif selon la revendication 5, comprenant par ailleurs:
un second module d'affichage (200) configuré pour afficher, avant que le premier module de commande (170) ne commande le terminal mobile pour se connecter au réseau WiFi présentant actuellement le niveau de sécurité le plus élevé, une information utile indiquant s'il y a lieu de se connecter au réseau WiFi présentant actuellement le niveau de sécurité le plus élevé.

9. Terminal mobile, comprenant: le dispositif pour établir une connexion entre un terminal mobile et un réseau WiFi selon l'une quelconque des revendications 5 à 8.
